Europäisches Patentamt

European Patent Office

Office européen des brevets

(19)

(11) Veröffentlichungsnummer: **0 225 845**
**B1**

(12) # EUROPÄISCHE PATENTSCHRIFT

(45) Veröffentlichungstag der Patentschrift:
17.01.90

(51) Int. Cl.⁴: **F16B 13/06**

(21) Anmeldenummer: **86810517.2**

(22) Anmeldetag: **13.11.86**

(54) **Spreizdübel mit Ansatz am Spreizelement.**

(30) Priorität: **12.12.85 DE 3543888**

(43) Veröffentlichungstag der Anmeldung:
**16.06.87 Patentblatt 87/25**

(45) Bekanntmachung des Hinweises auf die Patenterteilung:
**17.01.90 Patentblatt 90/3**

(84) Benannte Vertragsstaaten:
**AT BE CH DE FR GB IT LI NL SE**

(56) Entgegenhaltungen:
**EP-A- 0 040 300**
**CH-A- 636 678**
**DE-A- 3 125 457**
**DE-A- 3 346 214**
**DE-B- 1 750 162**

(73) Patentinhaber: **HILTI Aktiengesellschaft,**
**FL-9494 Schaan(LI)**

(72) Erfinder: **Huegel, Robert, Eichendorfstrasse 9,**
**D-8912 Kaufering(DE)**
Erfinder: **Herb, Armin, Lärchenstrasse 9,**
**D-8123 Peissenberg(DE)**

(74) Vertreter: **Wildi, Roland, Hilti Aktiengesellschaft**
**Patentabteilung, FL-9494 Schaan(LI)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Spreizdübel mit einem hülsenförmigen, eine sich in Setzrichtung zum vorderen Ende im Querschnitt verengende Ausnehmung aufweisenden Dübelkörper und einem in der Ausnehmung angeordneten Spreizelement.

Spreizdübel der genannten, aus der DE-A 3 125 457 bekannten Art, weisen im Einsatz ein Nachspreizverhalten auf, d.h. die Spreizung nimmt bei Belastung des Dübels zu. Daher werden diese Dübel sehr oft bei dynamischer Belastung angewendet.

Damit eine Nachspreizung erfolgen kann, muss sich das Spreizelement gegenüber dem Dübelkörper in axialer Richtung relativ verschieben können, was bei den bekannten Spreizdübeln nicht immer gewährleistet ist. Infolge zu hoher Flächenpressung kann das Spreizelement anfressen, was praktisch bedeutet, dass das Spreizelement mit dem Dübelkörper kalt verschweisst wird. Zu hohe Flächenpressungen entstehen bei ungleichmässiger Verteilung des Spreizdruckes und treten hauptsächlich am vorderen Ende des Spreizelementes auf. Das Spreizelement kann sich dabei in die Oberfläche des Dübelkörpers eingraben, so dass eine weitere Relativverschiebung des Spreizelementes gegenüber dem Dübelkörper nicht mehr möglich ist. Zusätzliche Massnahmen am Spreizelement wie Rundungsradien, Anfasungen und dgl. können auch keine Abhilfe schaffen und führen bei der Fertigung lediglich zu einem Mehraufwand.

Beispielsweise bei dem aus der EP-A 0 040 300 bekannten Spreizdübel treten in jenem Bereich, wo der Dübelkörper seinen grössten Querschnitt hat, die höchsten Flächenpressungen auf, was dazu führt, dass die relativ grossen aufeinanderliegenden Flächen von Dübelkörper und Spreizelement miteinander kalt verschweisst werden. Dadurch sind Dübelkörper und Spreizelement derart fest miteinander verbunden, dass es zu einer für die Nachspreizung massgebenden Relativverschiebung zwischen diesen Teilen nicht mehr kommen kann.

Vergleichbare Nachteile weist der Spreizdübel entsprechend DE-B 1 750 162 auf. Auch bei diesem Spreizdübel liegen im Bereich, wo die grösste Flächenpressung auftritt, grosse Flächenanteile von Dübelkörper und Spreizkörper aufeinander, so dass auch hier die Gefahr einer Kaltverschweissung besteht, was dazu führt, dass die für das Nachspreizen massgebende Relativverschiebung zwischen den beiden Teilen nicht mehr möglich ist.

Der Erfindung liegt deshalb die Aufgabe zugrunde, einen Spreizdübel der eingangs genannten Art zu schaffen, bei dem ein ausreichendes Nachspreizverhalten sichergestellt ist.

Gemäss Erfindung wird diese Aufgabe durch das kennzeichnende Teil des Anspruches 1 gelöst.

Die gegenüber dem rückwärtig daran anschliessenden Bereich des Spreizelementes im Querschnitt reduzierten verformbaren Ansätze schaffen eine zusätzliche Auflagefläche, die einerseits dazu geeignet ist, das Spreizelement an der Wandung des Bohrloches ausreichend festzulegen, andererseits aber im Bereich der grössten Spreizwirkung die auftretende Flächenpressung derart reduziert, dass es zu keiner Kaltverschweissung kommen kann. Insbesondere wirkt sich ein Verformen dieser Ansätze unter dem auftretenden Druck vorteilhaft aus.

Die schalenförmige Ausbildung des Spreizelementes bewirkt im Zusammenwirken mit einer entsprechenden Ausnehmung im Dübelkörper eine Aufweitung des hülsenförmigen Dübelkörpers über den gesamten Umfang. Dabei können sowohl das Spreizelement als auch der Dübelkörper vorzugsweise durch Stanzen aus Blech hergestellt werden.

Damit durch die Ansätze eine wirksame Entlastung des Spreizelementes zustande kommt, beträgt zweckmässigerweise die axiale Erstreckung der Ansätze das 0,1- bis 0,3-fache des sich rückwärtig daran anschliessenden Bereiches des Spreizelementes. Somit wird die Gesamtfläche an der am höchsten beanspruchten Stelle des Spreizelementes um mindestens 10% vergrössert. Da die Druckverteilung am Spreizelement meist nicht gleichmässig ist, kann dies bedeuten, dass der Spitzendruck etwa bis zur Hälfte abgebaut wird.

Die Erfindung soll nachstehend anhand der sie beispielsweise wiedergebenden Zeichnung näher erläutert werden. Diese zeigt einen erfindungsgemässen Spreizdübel, in ungespreiztem Zustand.

Der erfindungsgemässe Spreizdübel besteht aus einem hülsenförmigen, insgesamt mit 31 bezeichneten Dübelkörper und einem insgesamt mit 32 bezeichneten Spreizelement. Der Dübelkörper 31 weist eine Ausnehmung 31a auf, welche sich zum vorderen Ende 31b hin verengt. Das Spreizelement 32 ist an den Flanken 31c des Dübelkörpers 31 abgestützt. Zum Vortreiben des Spreizelementes 32 ist dieses in seinem rückwärtigen Bereich mit einer Einprägung 32a versehen, welche eine in die lichte Weite des Dübelkörpers 31 ragende Schulter bildet. Das Spreizelement 32 ist an seinem vorderen Ende mit Ansätzen 32b versehen. Diese Ansätze 32b werden durch einen Ausschnitt 32c gebildet und sind begrenzt verformbar. Beim Vortreiben des Spreizelementes 32 können die Ansätze 32b gegeneinander gebogen werden. Dadurch wird die Kantenpressung am vorderen Ende des Spreizelementes 32 reduziert und ein Anfressen des Spreizelementes 32 an den Flanken 31c des Dübelkörpers 31 verhindert.

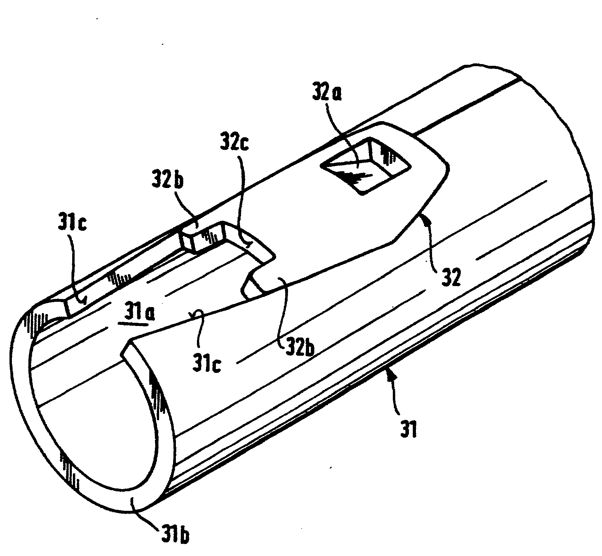

## Patentansprüche

1. Spreizdübel mit einem hülsenförmigen, eine sich in Setzrichtung zum vorderen Ende im Querschnitt verengende Ausnehmung (31a) aufweisenden Dübelkörper (31) und einem in der Ausnehmung (31a) angeordneten Spreizelement (32), dadurch gekennzeichnet, dass das Spreizelement (32) schalenförmig ausgebildet ist und an seinem vorderen Ende verformbare Ansätze (32b) aufweist, die gegenüber dem rückwärtig daran anschliessenden Bereich des Spreizelementes (32) einen reduzierten Querschnitt aufweisen.

2. Spreizdübel nach Anspruch 1, dadurch gekennzeichnet, dass die axiale Erstreckung der Ansätze (32b) das 0,1- bis 0,3-fache des sich rückwärtig daran anschliessenden Bereiches des Spreizelementes (32) betragen.

## Claims

1. Expansion dowel including a sleeve-shaped dowel body (31) with a cut-out (31a) which narrows cross-sectionally in the setting direction towards the front end, and an expansion element (32) disposed in the cutout (31a), characterised in that the expansion element (32) is dish-shaped and has deformable extensions (32b) which have a reduced cross-section towards the rearwardly adjacent area of the expansion dowel.

2. Expansion dowel according to claim 1, characterised in that the axial extent of the extensions (32b) is 0.1 to 0.3 times that of the rearwardly adjacent region of the expansion element (32).

## Revendications

1. Cheville à expansion comprenant un corps de cheville (31) en forme de couille avec un évidement (31a) dont la section se rétrécit dans le sens de l'enfoncement en direction de l'extrémité antérieure, et un élément d'écartement (32) disposé dans l'évidement (31a), caractérisée en ce que l'élément d'écartement (32) est conformé en cuvette et présente à son extrémité antérieure des appendices (32b) déformables dont la section est réduite par rapport à la région de l'élément d'écartement (32) qui y fait suite vers l'arrière.

2. Cheville à expansion selon la revendication 1, caractérisée en ce que l'extension axiale des appendices (32b) est égale à 0,1 à 0,3 fois la région de l'élément d'écartement (32) qui y fait suite vers l'arrière.